(19)

Europäisches
Patentamt
European
Patent Office
Office européen
des brevets

(11) **EP 2 876 596 A1**

(12) **EUROPEAN PATENT APPLICATION**

(43) Date of publication:
27.05.2015 Bulletin 2015/22

(51) Int Cl.:
*G06Q 30/02* (2012.01)

(21) Application number: 14193808.4

(22) Date of filing: 19.11.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 22.11.2013 KR 20130142714

(71) Applicant: **Postech Academy-Industry Foundation
Gyeongsangbuk-do 790-784 (KR)**

(72) Inventors:
• **Yu, Hwan Jo**
**790-751 Gyeongsangbuk-do (KR)**
• **Oh, Jin Oh**
**536-854 Jeollanam-do (KR)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **Method and apparatus for determining content recommendation time using context awareness**

(57)    Disclosed is an apparatus for recommending content using user context awareness. A content recommendation method performed by the content recommendation apparatus includes monitoring content use information of a user, calculating a profit of the user for content recommendation and an annoyance of the user with the content recommendation based on a result of the monitoring, and comparing the calculated profit and annoyance to determine a time to recommend content to the user. Accordingly, the content recommendation can be provided without interfering with use of content by the user by recommending content using awareness of the user's context.

## FIG. 1

START

S110 — RECEIVE REQUEST FOR CONTENT RECOMMENDATION FROM USER

S120 — RETRIEVE CONTENT

S130 — PROVIDE LIST OF RETRIEVED CONTENT

S140 — PROVIDE CONTNET BASED ON SELECTION OF USESR AND UPDATA USER PROFILE

END

EP 2 876 596 A1

**Description**

CLAIM FOR PRIORITY

This application claims priority to Korean Patent Application No. 10-2013-0142714 filed on November 22, 2013 in the Korean Intellectual Property Office (KIPO), the entire contents of which are hereby incorporated by reference.

BACKGROUND

1. Technical Field

Example embodiments of the present invention relate in general to a method of recommending content to a user who uses content and more specifically to a method and apparatus for determining a time to recommend content using context awareness in which the content is recommended in consideration of a degree of convenience or inconvenience in providing a content recommendation to a user.

2. Related Art

The amount of content that can be accessed by users increases geometrically with advance of transmission and storage technologies for all kinds of media. In particular, all kinds of media devices that are largely scaled through digital broadcasting and a high-speed Internet network infrastructure enable users to use a large amount of content anywhere at any time.

As the amount of content provided to users increases, it takes much time and effort to retrieve and select content desired by users from among a large amount of content. To solve this problem, many attempts are being made to develop technologies related to the content recommendation.

A content recommendation system that is currently used measures a preference for content based on a use history of a user who uses the content and recommends content highly preferred by the user.

In addition, a related art method of recommending content provides the content recommendation only when the user requests the recommendation. Furthermore, since the content recommendation is provided without consideration of a degree of convenience or inconvenience in providing the content recommendation to users, the use of the content by the users is inhibited.

SUMMARY

Accordingly, example embodiments of the present invention are provided to substantially obviate one or more problems due to limitations and disadvantages of the related art.

Example embodiments of the present invention provides a method of determining a content recommendation time using context awareness, which determines the content recommendation time in consideration of a degree of convenience or inconvenience in providing content recommendation to a user.

Example embodiments of the present invention also provide an apparatus for performing the method of determining a content recommendation time using context awareness.

In some example embodiments, a method of determining a content recommendation time using context awareness includes monitoring use of content by a user; calculating a profit from content recommendation and an annoyance with the content recommendation based on the monitored information; and comparing the calculated profit with the calculated annoyance to determine the content recommendation time.

The monitoring may include monitoring at least one of a content use start time of the user, a remaining playback time of the content, and a time during which the user uses the content.

The calculating may include calculating the profit based on at least one of a preference for content that is used by the user and an attractiveness of the content. The preference may be determined by comparing the preference for the content that is used by the user with preferences for a plurality of pieces of content that are to be provided to the user. In addition, the attractiveness may be determined based on a time during which the user uses the content and a remaining playback time of the content that is used by the user.

The calculating may include calculating the annoyance with the content recommendation based on at least one of a period and a correctness of the content recommendation that is provided to the user.

The determining may include determining a time at which the profit is greater than the annoyance as the content recommendation time.

In other example embodiments, an apparatus for determining a content recommendation time using context awareness includes a processing unit configured to monitor use of content by a user, calculate a profit from content recommendation and an annoyance with the content recommendation based on the monitored information, and compare the calculated profit with the calculated annoyance to determine the content recommendation time; and a storage unit configured to store the monitored information corresponding to control of the processing unit.

The processing unit may calculate the profit based on at least one of a preference for content that is used by the user and an attractiveness of the content and may calculate the annoyance based on at least one of a period and a correctness of the content recommendation that is provided to the user.

The processing unit may determine a time at which the profit is greater than the annoyance as the content recommendation time.

BRIEF DESCRIPTION OF DRAWINGS

Example embodiments of the present invention will become more apparent by describing in detail example embodiments of the present invention with reference to the accompanying drawings, in which:

FIG. 1 is a flowchart showing a content recommendation method;
FIG. 2 is a flowchart showing a method of determining a content recommendation time according to an embodiment of the present invention;
FIG 3 is a more detailed flowchart showing a process of determining a content recommendation time based on monitored information shown in FIG. 2;
FIG. 4 is a graph showing a probability that a user uses content according to a remaining playback time of the content;
FIG. 5 is a conceptual view for describing content selection of a user based on a content recommendation according to an embodiment of the present invention;
FIG. 6 is a graph showing change in an annoyance of a user based on a content recommendation according to an embodiment of the present invention; and
FIG. 7 is a block diagram illustrating a configuration of a content recommendation time determination apparatus according to an embodiment of the present invention.

DESCRIPTION OF EXAMPLE EMBODIMENTS

Since the present invention may be variously modified and have several exemplary embodiments, specific exemplary embodiments will be shown in the accompanying drawings and be described in detail in a detailed description.

However, it should be understood that the particular embodiments are not intended to limit the present disclosure to specific forms, but rather the present disclosure is meant to cover all modification, similarities, and alternatives which are included in the spirit and scope of the present disclosure.

In the following description, the technical terms are used only for explaining a specific exemplary embodiment while not limiting the present disclosure. Singular forms used herein are intended to include plural forms unless explicitly indicated otherwise. It will be further understood that the terms "comprises," "comprising," "includes," and/or "including" when used herein, specify the presence of stated features, integers, steps, operations, elements, and/or components, but do not preclude the presence or addition of one or more other features, integers, steps, operations, elements, components, and/or a combination thereof.

Unless otherwise defined, all terms (including technical and scientific terms) used herein have the same meaning as commonly understood by one of ordinary skill in the art to which this invention belongs. Terms such as terms that are generally used and have been in dictionaries should be construed as having meanings matched with contextual meanings in the art. In this description, unless defined clearly, terms are not ideally, excessively construed as formal meanings.

Hereinafter, exemplary embodiments of the present invention will be described in detail with reference to the accompanying drawings. Hereinafter, the same reference numerals are used for the same components in the drawings, and the repetitive description thereof will be omitted.

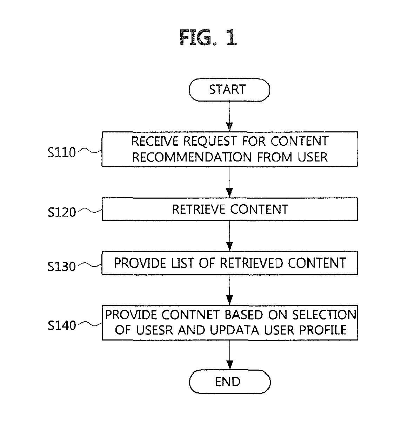

FIG. 1 is a flowchart showing a content recommendation method.

The content recommendation method shown in FIG. 1 may be performed by a content recommendation apparatus that may provide user profiling.

Referring to FIG. 1, first, the content recommendation apparatus receives a request for a content recommendation from a user (S110).

Subsequently, when the request for the content recommendation is received from the user, the content recommendation apparatus retrieves content that may be recommended to the user (S120). Here, the content recommendation apparatus retrieves content preferred by the user based on the frequency at which the user has previously used the content.

Subsequently, the content recommendation apparatus lists the retrieved content and provides a content list for the content recommendation to the user (S130).

Next, the content recommendation apparatus provides content to the user based on content selection of the user and applies information on the content provision to a user profile (S140).

The content recommendation method shown in FIG. 1 recommends content without consideration of a degree of preference or interest for content that is currently used by the user. Accordingly, the content recommendation method causes inconvenience to the user when the user uses the content.

To solve the above-described problem, the present invention proposes a method and apparatus for determining an optimum time to recommend content based on a degree of preference or interest for the content that is being used by the user.

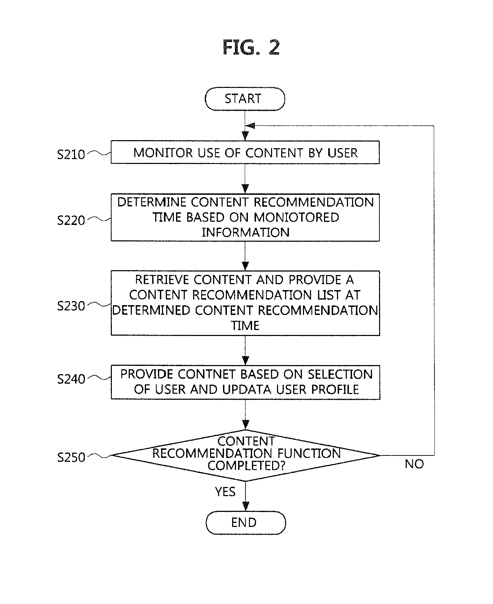

FIG. 2 is a flowchart showing a method of determining a content recommendation time according to an embodiment of the present invention.

The content recommendation time determination method shown in FIG. 2 may be performed by the content recommendation apparatus that may provide a content recommendation to the user. The content recommendation time determination method may be performed by a digital information processing device including a memory, a processor, and the like, for example, a set-top box (STB), a television (TV), or multimedia playback device.

Referring to FIG. 2, first, the content recommendation apparatus monitors content use information of a user in real time (S210). Here, when the user begins to use content, the content recommendation apparatus may monitor the content use information of the user, which includes a time at which the content begins to be used, a total playback time of the content, and a remaining playback time of the content.

Here, the content use information of the user may be acquired from an electronic program guide (EPG).

Subsequently, the content recommendation apparatus determines a time to recommend the content to the user based on the monitored information (S220). Here, the content recommendation apparatus may determine the content recommendation time using Equation 1 below.

[Equation 1]

$$\mathrm{Utility}(u, t) = \mathrm{Profit}(u, t) - \mathrm{Cost}(u, t)$$

In Equation 1, Profit(u,t) is a profit which is a degree of convenience that the user may feel and Cost(u,t) is an annoyance which is a degree of inconvenience that the user may feel when the content recommendation is provided to the user. In addition, u is a content user, and t is a time stamp. The content recommendation apparatus may determine a time at which Utility(u,t) becomes greater than zero as the content recommendation time.

Subsequently, the content recommendation apparatus retrieves content that may be provided to the user and provides a content recommendation list to the user at the content recommendation time determined in operation S220 (S230). Here, the content recommendation apparatus may retrieve a plurality of pieces of content that may be used by the user at a current time from content-viewing profile information of the user.

In addition, the content recommendation apparatus may visually provide the user with the content recommendation list, for example, in the form of a pop-up window on a display screen of a content playback apparatus and may provide a user interface in which the user may select the content.

Subsequently, the content recommendation apparatus provides the content to the user based on the selection of the user. Here, the content recommendation apparatus may receive the content selected by the user from a means (for example, an electronic program guide (EPG), a broadcasting wave, etc.) for providing the content and provide the content to the user. Subsequently, the content recommendation apparatus applies a content provision history to the profile of the user (S240).

Next, the content recommendation apparatus checks whether a content recommendation function is needed (S250). The content recommendation apparatus may determine that the content recommendation function is not needed when it is checked that the use of the content is completed, for example, when the content playback apparatus used by the user is powered off and thus there is not need to provide the content recommendation any more, or when the user directly turns off the content recommendation function because the user does not want to receive the content recommendation. As described above, the content recommendation function is completed when the content recommendation function is not needed.

However, when the content recommendation function is needed, the content recommendation apparatus proceeds to operation S210 and repeats operations S210 to S250.

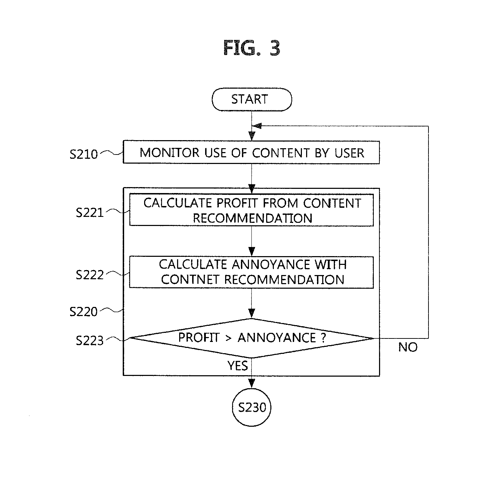

FIG. 3 is a more detailed flowchart showing a process of determining the content recommendation time based on monitored information shown in FIG. 2.

Referring to FIG. 3, in the process of determining the content recommendation time, first, the content recommendation apparatus calculates a profit of the user from the content recommendation (S221). Here, the profit from the content recommendation is a degree of convenience that the user may feel when the content recommendation is provided to the user.

In the process of determining the content recommendation time according to an embodiment of the present invention, the content recommendation apparatus may calculate the profit from the content recommendation based on Equation 2 below. Equation 2 calculates the profit from the content recommendation based on a preference of the user for the content.

[Equation 2]

$$\text{Utility}(u, t) = \text{Profit}(u, t) = \max_{I_j \in I_t} \text{Pref}\left(u, I_j\right) - \text{Pref}\left(u, I_{cur}\right)$$

In Equation 2, u is a content user, t is a time stamp, and It is content that is played back at time t. In addition, $I_{cur}$ is content that is currently used by the content user, and Pref(u,I) is a preference of the content user u for content I.

In the above-described method of calculating the profit based on the preference of the user for the content, a preference of the user for the content that is recommended to the user may be greater than a preference for the content that is currently used by the user.

In the process of determining the content recommendation time according to an embodiment of the present invention, alternatively, the content recommendation apparatus may calculate the profit from the content recommendation based on Equation 3 and Equation 4 below. Equation 3 calculates the profit from the content recommendation based on an attractiveness of the content to the user.

[Equation 3]

$$\text{Utility}(u, t) = \text{Profit}(u, t) = \max_{I_j \in I_t} \text{Attract}(u, I_j, t) - \text{Attract}(u, I_{cur}, t)$$

[Equation 4]

$$\text{Attract}\left(u, I_j, t\right) = \text{Pref}(u, I_j) \cdot p\left(\text{watching} | t_e^j, t_s^j\right)$$

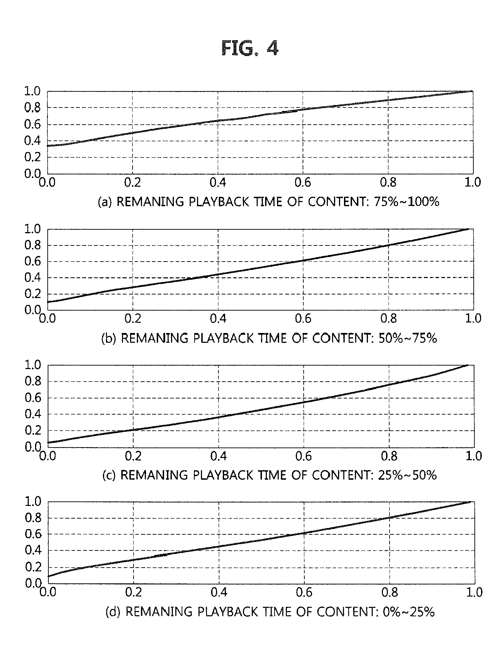

In Equation 3, u is a content user, t is a time stamp, and $I_t$ is content that is played back at time t. In addition, $I_{cur}$ is content that is currently used by the content user, and Attract(u,I,t) is an attractiveness of the content I to the content user u at the time t. Attract(u,$I_{cur}$,t) of Equation 3 may be calculated based on Equation 4 above. In Equation 4, $t_e^j$ is a remaining playback time of the content $I_j$, and $t_s^j$ is a time during which the content user uses the content $I_j$. It is assumed that $t_s$ for all content, except for the content that is currently used by the content user, is zero. $p\left(\text{watching} | t_e^j, t_s^j\right)$ of Equation 4 is a content user probability of the user when a remaining playback time of the content $I_i$ is $t_e^j$ and a time during which the user uses the content $I_j$ is $t_s^j$. $p\left(\text{watching} | t_e^j, t_s^j\right)$ will be described below with respect to FIG. 4

In FIG. 4, an X axis indicates a content use time ratio of the user, which means a ratio of a time during which the user uses the content to a remaining playback time of the content. A Y axis indicates a content use probability of the user.

FIG. 4A is a graph showing a case in which the percentage of the remaining playback time of the content is 75 to 100 %, and FIG. 4B is a graph showing a case in which the percentage of the remaining playback time of the content is 50 to 75 %. FIG. 4C is a graph showing a case in which the percentage of the remaining playback time of the content is 25 to 50 %, and FIG. 4D is a graph showing a case in which the percentage of the remaining playback time of the content is 0 to 25 %.

As shown in FIG. 4A, in a case in which the percentage of the remaining playback time of the content is 75 to 100 %, when the content use time ratio of the user is 0.0, the content use probability is about 0.35. The content use probability increases with an increase of the content use time ratio of the user.

As shown in FIG. 4B, in a case in which the percentage of the remaining playback time of the content is 50 to 75 %, when the content use time ratio of the user is 0.0, the content use probability is about 0.1. The content use probability increases with an increase of the content use time ratio of the user.

As shown in FIG. 4C, in a case in which the percentage of the remaining playback time of the content is 25 to 50 %, when the content use time ratio of the user is 0.0, the content use probability is about 0.05. The content use probability increases with an increase of the content use time ratio of the user.

As shown in FIG. 4D, in a case in which the percentage of the remaining playback time of the content is 0 to 25 %, when the content use time ratio of the user is 0.0, the content use probability is about 0.05. The content use probability increases with an increase of the content use time ratio of the user.

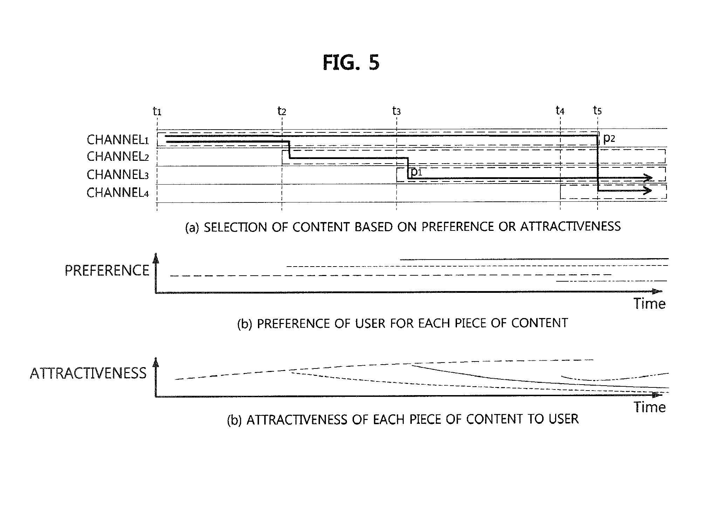

FIG. 5 shows a process of selecting content according to the preference or attractiveness.

In FIG. 5A, an X axis indicates a flow of time, a Y axis indicates each channel, P1 indicates a process in which a user selects the content based on content preference. Here, it is assumed that the content user accepts all content that are recommended by the content recommendation apparatus.

FIGS. 5B and 5C indicate the preference of the user for pieces of content that are provided at times $t_1$, $t_2$, $t_3$, $t_4$, and $t_5$ and the attractiveness of the content to the user, respectively.

First, the content user uses content 1 at time $t_1$. Subsequently, when content 2 having a preference that is higher than content 1 begins at time $t_2$, the content recommendation apparatus recommends content 2 to the user.

Next, the content user selects and uses the recommended content 2. While the user uses content 2, content 3 having a preference that is higher than content 2 begins at time $t_3$. Thus, the content recommendation apparatus recommends content 3 to the user.

Subsequently, the content user selects content 3 and begins to use content 3, and content 4 begins at time $t_4$. Here, as shown in FIG. 5B, since a preference for content 4 is lower than a preference for content 3, the content recommendation apparatus does not recommend content 4 to the user.

In FIG. 5A, P2 is a process in which the user selects content based on the attractiveness. FIG. 5C shows the attractiveness of the content provided at times $t_1$, $t_2$, $t_3$, $t_4$, and $t_5$ to the user.

First, the content user uses content 1 at time $t_1$. Subsequently, content 2 begins at time $t_2$. Here, the content recommendation apparatus does not recommend content 2 to the user because the attractiveness of content 1 to the user increases with time, and the user keeps using content 1.

Subsequently, content 3 begins at time $t_3$, and content 4 begins at time $t_4$. Here, since the attractiveness of content 1 to the user is higher than the attractiveness of content 3 and content 4 to the user, the content recommendation apparatus does not recommend content 3 or content 4.

Subsequently, when content 1 which is used by the user ends at time 5, the content recommendation apparatus recommends, to the user, content 4 having highest attractiveness from among content 2, content 3, and content 4, which are played back in other channels.

Subsequently, in the process of determining the content recommendation time, the content recommendation apparatus calculates an annoyance of the user with the content recommendation (S222). Here, the annoyance with the content recommendation is a degree of inconvenience that the user may feel when the content recommendation is provided to the user.

In the process of determining the content recommendation time according to an embodiment of the present invention, the content recommendation apparatus may calculate the annoyance with the content recommendation based on Equation 5 below.

Here, the annoyance with the content recommendation may be calculated based on an increase or decrease in the annoyance due to a period and a correctness of the content recommendation.

[Equation 5]

$$\mathrm{Annoy}\left(u, t_n, r_{t_n}, h_{t_n}\right) = \mathrm{Annoy}\left(u, t_{n-1}, r_{t_{n-1}}, h_{t_{n-1}}\right) \cdot \exp(\sigma_r)^{r_{t_n}} \cdot \exp(-\sigma_h)^{h_{t_n}} \cdot \exp(-\sigma_f)$$

In Equation 5, $t_n$ is a time, and $r_{t_n}$ is an existence or not of the content recommendation. That is, when the content recommendation apparatus provides the content recommendation to the user, $r_{t_n}$ is 1, and otherwise, $r_{t_n}$ is 0.

In addition, $h_{t_n}$ is a correctness of content that is recommended to the user by the content recommendation apparatus. That is, when the content is correctly recommended to the user, and thus the user accepts the recommendation to change content, $h_{t_n}$ is 1, and otherwise, $h_{t_n}$ is 0.

$\sigma_r$, $\sigma_n$, and $\sigma_f$ are a scaling factor for the recommendation, a correctness factor for the recommendation, and a forgetting speed factor for the annoyance, respectively.

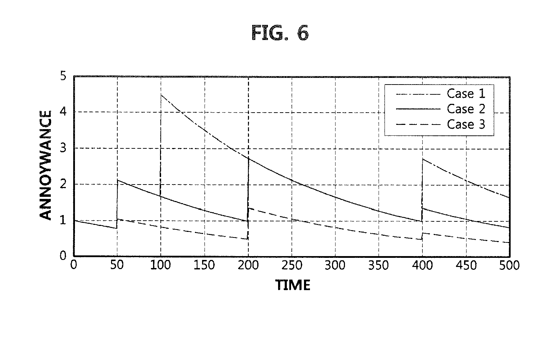

FIG. 6 is a graph showing change in an annoyance of a user based on a content recommendation according to an embodiment of the present invention.

In FIG. 6, an X axis indicates a flow of time as a range from 0 to 500, and a Y axis indicates change in the attractiveness due to recommendation correctness as a range from 0 to 5.

The annoyance that varies depending on the recommendation correctness will be described using three different conditions.

In condition 1, a user receives content recommendations from the content recommendation apparatus at times 50, 100, and 400. Here, it is assumed that all the recommendation performed by the content recommendation apparatus is not correct and thus the user does not change content that is in use.

As shown in FIG. 6, the annoyance with the content recommendation decreases from about 1 at a certain rate while the user uses the content in condition 1. Subsequently, at time 50, the content recommendation apparatus provides a content recommendation to the user. In this case, as assumed in condition 1, since the content recommendation apparatus recommends wrong content, the annoyance of the user with the content recommendation increases to about 2.

Subsequently, the annoyance of the user decreases with time at a certain rate in condition 1, and the content recommendation apparatus provides another content recommendation at time 100. In this case, as assumed in condition 1, since the content recommendation apparatus recommends wrong content and a time at which the annoyance increase due to the wrong content recommendation at time 50 is close to the wrong-content recommendation time, the annoyance of the user with the content recommendation increases to about 4.5.

Subsequently, the annoyance of the user decreases with time at a certain rate in condition 1, and the content recommendation apparatus provides another content recommendation at time 400. In this case, as assumed in condition 1, since the content recommendation apparatus recommends wrong content, the annoyance of the user with the content recommendation increases to about 3.

In condition 2, a user receives content recommendations from the content recommendation apparatus at times 50, 200, and 400. Here, it is assumed that only the content recommendation at time 400 is correct among the content recommendations of the content recommendation apparatus.

As shown in FIG. 6, the annoyance with the content recommendation decreases from about 1 at a certain rate while the user uses the content in condition 2 in the same way as in condition 1. Subsequently, at time 50, the content recommendation apparatus provides a content recommendation to the user. In this case, as assumed in condition 2, since the content recommendation apparatus provides a wrong content recommendation, the annoyance of the user with the content recommendation increases to about 2.

Subsequently, the annoyance of the user decreases with time at a certain rate in condition 2, and the content recommendation apparatus provides another content recommendation at time 200. In this case, as assumed in condition 2, since the content recommendation apparatus provides a wrong content recommendation, the annoyance of the user with the content recommendation increases to about 3.

Subsequently, the annoyance of the user decreases with time at a certain rate in condition 2, and the content recommendation apparatus provides another content recommendation at time 400. In this case, as assumed in condition 2, since the content recommendation apparatus provides a correct content recommendation, the user changes the content according to the recommendation, and the annoyance of the user with the content recommendation increases relatively slightly.

In condition 3, a user receives content recommendations from the content recommendation apparatus at times 50, 200, and 400. Here, it is assumed that only the content recommendations at times 50 and 400 are correct among the content recommendations of the content recommendation apparatus.

As shown in FIG. 6, the annoyance with the content recommendation decreases from about 1 at a certain rate while the user uses the content in condition 3. Subsequently, at time 50, the content recommendation apparatus provides a content recommendation to the user. In this case, as assumed in condition 3, since the content recommendation apparatus provides a correct content recommendation, the user changes the content according to the recommendation, and the annoyance of the user with the content recommendation increases relatively slightly.

Subsequently, the annoyance of the user decreases with time at a certain rate in condition 3, and the content recommendation apparatus provides another content recommendation at time 200. In this case, as assumed in condition 3, since the content recommendation apparatus recommends wrong content, the annoyance of the user with the content recommendation increases to about 1.

Subsequently, the annoyance of the user decreases with time at a certain rate in condition 3, and the content recommendation apparatus provides another content recommendation at time 400. In this case, as assumed in condition 3, since the content recommendation apparatus provides a correct content recommendation, the user changes the content according to the recommendation, and the annoyance of the user with the content recommendation increases relatively slightly.

Subsequently, in the process of determining the content recommendation time, the content recommendation apparatus compares the profit calculated in operation S221 with the annoyance calculated in operation S222 (S223).

Subsequently, the content recommendation apparatus determines a time at which the calculated profit is greater than the calculated annoyance as the content recommendation time, retrieves content that is to be recommended to the user, and provide a content recommendation list at the determined time.

In addition, when the profit calculated in operation S223 is less than the calculated annoyance, the content recommendation apparatus proceeds to operation S210 and repeats operations S210 to S223.

A content recommendation time using context awareness according to an embodiment of the present invention is determined using Equation 6 below.

[Equation 6]

$$\text{Utility}(u, t_n) = \max_{I_j \in I_{t_n}} Attract\left(u, I_j\right) - Attract\left(u, I_{cur}\right) - c \cdot Annoy\left(u, P_{t_{n-1}}\right)$$

Equation 6 indicates a method of determining the content recommendation time based on the above-described profit of the user from the content recommendation and annoyance of the user with the content recommendation. In Equation 6,

$$\max_{I_j \in I_{t_n}} Attract\left(u, I_j\right) - Attract\left(u, I_{cur}\right)$$

may be the profit of the user from the content recommendation. In addition, $c \cdot Annoy(u, P_{t_{n-1}})$ may be the annoyance of the user with the content recommendation.

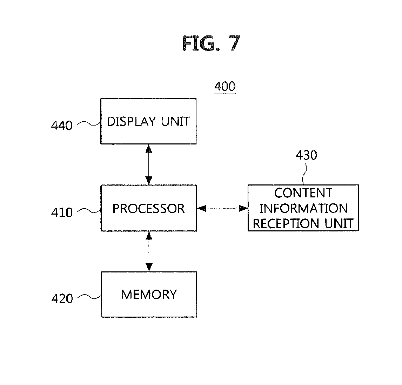

FIG. 7 is a block diagram illustrating a configuration of a content recommendation time determination apparatus according to an embodiment of the present invention.

A content recommendation time determination apparatus 500 may be implemented as a content playback apparatus that may provide a variety of content, such as a television (TV), a computer multimedia player. In addition, the content recommendation time determination apparatus 400 may be configured as a digital information processing device such as a smart TV including a memory, a memory, and so on, an internet protocol (IP) TV, a set-top box, a multimedia player, a potable terminal (for example, a cellphone, a smartphone, a pad-type terminal, and the like), and a computer, or configured to include the above device.

Referring to FIG. 7, a configuration of the content recommendation time determination apparatus 400 will be described in detail.

The content recommendation time determination apparatus 400 may include a processing unit 410, a storage unit 420, a content information reception unit 430, and a display unit 440.

The processing unit 410 may be configured, as a device capable of actually processing commands or data, to monitor use of content by the user. The monitored information may include a time at which the user begins to use the content, an entire playback time of the content, and a remaining time of the content.

Subsequently, the processing unit 410 calculates the profit of the user from the content recommendation and the annoyance of the user with the content recommendation based on the monitored content use information of the user and compares the calculated profit and annoyance according to the method described above with reference to FIG. 3.

Subsequently, the processing unit 410 may determine a time at which the profit is greater than the annoyance as the content recommendation time and acquire content that is to be recommended at the determined time, from the content information reception unit 430.

The storage unit 420 may be actually configured as a non-volatile memory. The content use information of the user that is monitored by the processing unit 410 to determine the content recommendation time may be stored and the history of providing the content to the user may be also stored.

The content information reception unit 430 may acquire content provision-related information that is needed to recommend the content to the user at a content recommendation time that is determined from a separate external server. A method of receiving the content provision-related information is not limited to the acquisition from the external server.

For example, when the content recommendation time determination apparatus 400 is implemented in a digital TV, the content provision-related information may be acquired from a broadcasting wave. The content provision-related information may include a time-based content provision list and a provision time of each piece of the content.

The display unit 440 may be configured, as a display device such as a liquid crystal display (LCD), an original light emitting diode (OLED), and the like, to visually provide content that may be recommended at the content recommendation time determined by the processing unit 410.

According to the above-described method and apparatus for determining a content recommendation time using user context awareness, it is possible to recommend content in consideration of a degree of convenience or inconvenience in providing the content recommendation to the user by monitoring use of content by the user, determining the content recommendation time based on a result of the monitoring, and providing content recommendation to the user.

Furthermore, interference with use of content due to content recommendation that is unnecessary for the user who uses the content can be reduced by providing the above-described content recommendation.

While the example embodiments of the present invention and their advantages have been described in detail, it should be understood that various changes, substitutions and alterations may be made herein without departing from the scope of the invention.

**Claims**

1. A method of determining a content recommendation time using context awareness, which is performed by a device capable of digital signal processing, the method comprising:

   monitoring use of content by a user;
   calculating a profit from content recommendation and an annoyance with the content recommendation based on the monitored information; and
   comparing the calculated profit with the calculated annoyance to determine the content recommendation time.

2. The method of claim 1, wherein the monitoring comprises monitoring at least one of a content use start time of the user, a remaining playback time of the content, and a time during which the user uses the content.

3. The method of claim 1, wherein the calculating comprises calculating the profit based on at least one of a preference for content that is used by the user and an attractiveness of the content.

4. The method of claim 3, wherein the preference is determined by comparing the preference for the content that is used by the user with preferences for a plurality of pieces of content that are to be provided to the user.

5. The method of claim 3, wherein the attractiveness is determined based on a time during which the user uses the content and a remaining playback time of the content that is used by the user.

6. The method of claim 1, wherein the calculating comprises calculating the annoyance with the content recommendation based on at least one of a period and a correctness of the content recommendation that is provided to the user.

7. The method of claim 1, wherein the determining comprises determining a time at which the profit is greater than the annoyance as the content recommendation time.

8. An apparatus for determining a content recommendation time using context awareness, the apparatus comprising:

   a processing unit configured to monitor use of content by a user, calculate a profit from content recommendation and an annoyance with the content recommendation based on the monitored information, and compare the calculated profit with the calculated annoyance to determine the content recommendation time; and
   a storage unit configured to store the monitored information corresponding to control of the processing unit.

9. The apparatus of claim 8, wherein the processing unit monitors at least one of a content use start time of the user, a remaining playback time of the content, and a time during which the user uses the content.

10. The apparatus of claim 8, wherein the processing unit calculates the profit based on at least one of a preference for content that is used by the user and an attractiveness of the content.

**11.** The apparatus of claim 10, wherein the processing unit determines the preference used to calculate the profit by comparing the preference for the content that is used by the user with preferences for a plurality of pieces of content that are to be provided to the user.

**12.** The apparatus of claim 10, wherein the processing unit determines the attractiveness used to calculate the profit based on a time during which the user uses the content and a remaining playback time of the content that is used by the user.

**13.** The apparatus of claim 8, wherein the processing unit calculates the annoyance with the content recommendation based on at least one of a period and a correctness of the content recommendation that is provided to the user.

**14.** The apparatus of claim 8, wherein the processing unit determines a time at which the profit is greater than the annoyance as the content recommendation time.

# FIG. 1

```
            ( START )
               │
               ▼
S110  ┌────────────────────────────┐
      │  RECEIVE REQUEST FOR CONTENT │
      │  RECOMMENDATION FROM USER    │
      └────────────────────────────┘
               │
               ▼
S120  ┌────────────────────────────┐
      │      RETRIEVE CONTENT       │
      └────────────────────────────┘
               │
               ▼
S130  ┌────────────────────────────┐
      │  PROVIDE LIST OF RETRIEVED CONTENT │
      └────────────────────────────┘
               │
               ▼
S140  ┌────────────────────────────────┐
      │ PROVIDE CONTNET BASED ON SELECTION │
      │ OF USESR AND UPDATA USER PROFILE   │
      └────────────────────────────────┘
               │
               ▼
            (  END  )
```

## FIG. 2

```
                    ( START )
                        │
  S210 ──┐    ┌─────────▼─────────────────┐
         └────│ MONITOR USE OF CONTENT BY USER │
              └─────────┬─────────────────┘
                        │
  S220 ──┐    ┌─────────▼─────────────────┐
         └────│ DETERMINE CONTENT RECOMMENDATION │
              │   TIME BASED ON MONIOTORED       │
              │         INFORMATION              │
              └─────────┬─────────────────┘
                        │
  S230 ──┐    ┌─────────▼─────────────────┐
         └────│    RETRIEVE CONTENT AND PROVIDE A    │
              │  CONTENT RECOMMENDATION LIST AT      │
              │ DETERMINED CONTENT RECOMMENDATION    │
              │               TIME                  │
              └─────────┬─────────────────┘
                        │
  S240 ──┐    ┌─────────▼─────────────────┐
         └────│  PROVIDE CONTNET BASED ON SELECTION  │
              │   OF USER AND UPDATA USER PROFILE    │
              └─────────┬─────────────────┘
                        │
  S250 ──┐         ◄────▼────►
         └──────<   CONTENT                >── NO
                < RECOMMENDATION FUNCTION >
                <     COMPLETED?          >
                        │
                   YES  │
                    ( END )
```

## FIG. 3

# FIG. 4

(a) REMANING PLAYBACK TIME OF CONTENT: 75%~100%

(b) REMANING PLAYBACK TIME OF CONTENT: 50%~75%

(c) REMANING PLAYBACK TIME OF CONTENT: 25%~50%

(d) REMANING PLAYBACK TIME OF CONTENT: 0%~25%

# FIG. 5

(a) SELECTION OF CONTENT BASED ON PREFERENCE OR ATTRACTIVENESS

(b) PREFERENCE OF USER FOR EACH PIECE OF CONTENT

(b) ATTRACTIVENESS OF EACH PIECE OF CONTENT TO USER

FIG. 6

FIG. 7

Europäisches
Patentamt

European
Patent Office

Office européen
des brevets

**EUROPEAN SEARCH REPORT**

Application Number

EP 14 19 3808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/11445 A2 (KONINKL PHILIPS ELECTRONICS NV [NL]) 7 February 2002 (2002-02-07) * abstract * * page 2, line 1 - line 9 * * page 2, line 27 - page 4, line 6 * * page 6, line 28 - page 7, line 20 * * page 9, line 9 - line 23 * * page 11, line 29 - page 12, line 2 * ----- | 1-14 | INV. G06Q30/02 |

TECHNICAL FIELDS SEARCHED (IPC)

G06Q

The present search report has been drawn up for all claims

| Place of search | Date of completion of the search | Examiner |
|---|---|---|
| Munich | 14 January 2015 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 3808

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2015

| Patent document cited in search report | | Publication date | Patent family member(s) | | Publication date |
|---|---|---|---|---|---|
| WO 0211445 | A2 | 07-02-2002 | AT | 491305 T | 15-12-2010 |
| | | | EP | 1316214 A2 | 04-06-2003 |
| | | | ES | 2357194 T3 | 19-04-2011 |
| | | | JP | 4991082 B2 | 01-08-2012 |
| | | | JP | 2004505562 A | 19-02-2004 |
| | | | US | 7937725 B1 | 03-05-2011 |
| | | | WO | 0211445 A2 | 07-02-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130142714